# FASCICULE DE BREVET EUROPEEN

(11) **EP 0 673 879 B1**
(45) Date de publication et mention de la délivrance du brevet: **06.05.1998**
(21) Numéro de dépôt: 95400349.7
(22) Date de dépôt: 20.02.1995
(51) Int. Cl.: C01B 25/32, C01F 11/18

(54) **Procédé de préparation de sels de calcium à faible teneur en aluminium**
Verfahren zur Herstellung von Calciumsalzen mit einem geringen Aluminiumgehalt
Process for the preparation of calcium salts with a small content of aluminium

(30) Priorité: 28.02.1994 US 203338
(43) Date de publication de la demande: 27.09.1995
(73) Titulaire: RHONE-POULENC INC., Cranbury, New Jersey 08512-7500 (US)
(72) Inventeur: Bacardi, Jean-Marie, Hawthorn Woods, Illinois 60047 (US)
(74) Mandataire: Seugnet, Jean Louis

(56) Documents cités:
- FR-A- 1 437 154
- US-A- 3 872 219
- US-A- 4 324 772

## Description

La présente invention concerne un procédé de préparation de sels de calcium à faible teneur en aluminium.

La présente invention porte, en particulier, sur la fabrication des sels de calcium, tels que les phosphates de calcium, par exemple, le phosphate tricalcique et le phosphate bicalcique, et le carbonate de calcium ne contenant pas plus d'environ 100 parties par million (ppml) d'aluminium.

L'inquiétude provoquée par le rôle que joue l'aluminium contenu dans les produits alimentaires en relation avec la maladie d'Alzheimer a créé un marché pour les produits alimentaires et les additifs alimentaires contenant un minimum d'aluminium. Les fabricants de produits alimentaires liquides pour personnes âgées et de formules pour les enfants en bas âge à base d'hydroxyapatite (appelée phosphate tricalcique ou TCP dans le commerce) sont concernés par les teneurs en aluminium de leurs produits.

Le phosphate tricalcique présent dans les produits en question contient des quantités relativement importantes d'aluminium, à savoir 400 mg ou plus, étant donné qu'il est obtenu à partir de chaux vive ou de chaux hydratée qui, généralement, contiennent plus de 0,1 % en poids d'aluminium. Le traitement physique de la boue de chaux éteinte n'élimine pas complètement l'aluminium. Le phosphate tricalcique du commerce contenant 400 ppm d'aluminium contient encore environ la moitié de l'aluminium présent dans la chaux vive à partir de laquelle il a été obtenu.

Le brevet US n° 3 872 219 indique que les chaux du commerce peuvent contenir des impuretés, tels que des dérivés du fer, de la silice, des sels d'aluminium, des sels de magnésium, de la magnésie, de la pierre à chaux non cuite (carbonate de calcium et carbonate de magnésium) et des traces d'autres composés. Ce brevet précise encore que la chloration d'une boue aqueuse de chaux à l'aide d'un agent de chloration, tel que le chlore gazeux, donne une solution de chaux chlorée contenant de l'hypochlorite de calcium et du chlorure de calcium. Pendant la chloration, la plupart des impuretés précitées restent insolubles et peuvent être éliminées de la solution de chaux chlorée, par exemple, par filtration ou par centrigugation. Le chlorure de calcium étant un co-produit de ladite réaction de chloration, on ne suggère pas de le récupérer en soi et encore moins de le récupérer et le transformer en quelque autre sel de calcium. Le procédé de chloration du brevet US n° 3 872 219 ne constitue pas une formule pratique pour obtenir un produit à base de chlorure de calcium à faible teneur en aluminium, ledit produit étant destiné spécifiquement à être utilisé comme réactif dans d'autres synthèses. La production de chlorure de calcium décrite dans le brevet US n° 3 872 219 est accompagnée d'un autre produit calcique soluble, à savoir l'hypochlorite de calcium, dont il faudrait séparer le chlorure de calcium, ce dernier devant être utilisé comme réactif dans une opération de conversion chimique ultérieure. On peut s'attendre à ce qu'il soit assez complexe et onéreux de séparer l'un des produits dissous (le chlorure de calcium) de l'autre (l'hypochlorite de calcium).

Le brevet US n° 4 324 772 décrit un procédé de préparation en continu de phosphate tricalcique dans lequel on fait réagir la boue de chaux avec une solution d'acide phosphorique afin d'obtenir le produit désiré. Toutes ou la plupart des impuretés présentes au départ dans la boue de chaux, y compris, bien entendu, l'aluminium, se retrouvent dans le phosphate tricalcique, ce que cherche à éviter précisément le procédé selon la présente invention.

La présente invention concerne des sels de calcium, tels que phosphates de calcium et carbonate de calcium, présentant de faibles concentrations en aluminium qui ne dépassent pas, par exemple, de préférence environ 100 ppm, plus préférentiellement environ 10 ppm et encore plus préférentiellement environ 2 ppm. On obtient les sels de calcium à faible teneur en aluminium par un procédé qui comprend une étape préliminaire dans laquelle on fait réagir l'oxyde de calcium (par l'intermédiaire d'une bouillie d'hydroxyde de calcium) avec de l'acide chlorhydrique aqueux. Au cours de cette réaction on obtient une solution aqueuse de chlorure de calcium à faible teneur en aluminium et un résidu insoluble contenant diverses impuretés dont l'aluminium associé au départ à l'oxyde de calcium. La majeure partie de l'aluminium est liée ou fixée sur ce résidu insoluble que l'on peut éliminer facilement par n'importe quel procédé approprié, par filtration, par exemple.

Le chlorure de calcium qui, pour l'essentiel, est exempt de résidu insoluble contenant l'aluminium peut être mis en oeuvre ensuite pour préparer les autres sels de calcium selon la présente invention.

Pour obtenir du phosphate tricalcique on transforme le chlorure de calcium à faible teneur en aluminium en hydroxyde de calcium par réaction avec un hydroxyde alcalin en milieu aqueux. . L'hydroxyde de calcium à faible teneur en aluminium qui en résulte est ensuite récupéré et on le fait réagir avec de l'acide phosphorique afin d'obtenir le phosphate tricalcique à faible teneur en aluminium.

Pour obtenir du phosphate dicalcique, on fait réagir le chlorure de calcium à faible teneur en aluminium dans un milieu aqueux avec du phosphate diammoniacal afin d'obtenir une solution aqueuse de chlorure d'ammonium et un précipité de phosphate dicalcique, ce dernier étant récupéré par la mise en oeuvre d'une des nombreuses méthodes appropriées connues.

Pour obtenir le carbonate de calcium, on fait réagir le chlorure de calcium à faible teneur en aluminium avec de l'ammoniac, du dioxyde carbone et de l'eau afin d'obtenir une solution aqueuse de chlorure d'ammonium et un précipité de carbonate de calcium. On récupère ensuite le carbonate de calcium à faible teneur en aluminium par n'importe quel procédé approprié.

Le procédé selon la présente invention met en oeuvre comme produit de départ de l'oxyde de calcium ("chaux vive" ou simplement "chaux" qui, en plus des autres impuretés, contient généralement de l'ordre de 600 à 2 000 ppm d'aluminium. La réaction de l'oxyde de calcium de départ avec l'acide chlorhydrique donne du chlorure de calcium dissous et un résidu gélatineux insoluble contenant un aluminosilicate complexe et d'autres impuretés, tel que du SiO₂, etc. Le résidu fixe la plupart des impuretés à base de silice, fer, aluminium et zinc avec un peu du fluorure présent initialement dans l'oxyde de calcium. Il est préférable de mettre en oeuvre un léger excès molaire d'acide pour assurer une conversion totale de l'oxyde de calcium en chlorure de calcium. Ce résidu gélatineux peut être séparé par tout procédé approprié, par filtration, par exemple. Le pH neutre du chlorure de calcium facilite la séparation de l'aluminium qui est alors amphotère et présente un minimum de solubilité. En mettant en oeuvre la procédure ci-dessus, on peut convertir l'oxyde de calcium du commerce qui, habituellement, contient de l'ordre de 600 à 2 000 ppm d'aluminium, en chlorure de calcium dissous qui, lorsqu'on le récupère, contient moins d'environ 5 % en poids et, de préférence, moins d'environ 1 % en poids de l'aluminium présent dans l'oxyde de calcium de départ. Le chlorure de calcium, après avoir été séparé du résidu insoluble, peut être mis en oeuvre dans la production d'autres dérivés du calcium ayant une faible teneur résiduelle en aluminium dans le cadre d'une ou de plusieurs opérations ultérieures de conversion chimique, tels que, par exemple, les phosphates de calcium, le carbonate cités plus haut, l'hydroxyde de calcium (que l'on peut transformer en l'un ou l'autre des sels précités), etc.

C'est ainsi que, pour obtenir du phosphate tricalcique (hydroxyapatite), on convertit la solution de chlorure de calcium qui, pour l'essentiel, est exempte de résidu insoluble contenant de l'aluminium, en hydroxyde de calcium en la faisant réagir avec un hydroxyde alcalin. Les hydroxydes alcalins pouvant être mis en oeuvre dans le procédé selon la présente invention comprennent les hydroxydes de sodium, de potassium ou de ltithium, la préférence allant à l'hydroxyde de sodium. Il est préférable de mettre en oeuvre un léger excès d'hydroxyde alcalin.

On peut récupérer le précipité d'hydroxyde de calcium par filtration ou tout autre procédé approprié et, de préférence, on le lave pour le débarrasser de tout chlorure de sodium encore présent. Ensuite, on fait une bouillie de l'hydroxyde de calcium récupéré et on la fait réagir avec de l'acide phosphorique dilué, de préférence en léger excès, afin d'obtenir une bouillie de phosphate tricalcique contenant, par exemple, environ 10 à 15 % en poids de matière solide. Ensuite, on récupère le phosphate tricalcique par filtration, on le lave, on le sèche, on le désagglomère ou broie pour obtenir le produit final qui contient moins d'aluminium que n'en contenait l'oxyde de calcium de départ. Le procédé selon la présente invention permet donc d'obtenir un phosphate tricalcique dont la teneur en aluminium ne dépasse pas de préférence environ 100 ppm, plus préférentiellement environ 10 ppm et encore plus préférentiellement environ 2 ppm.

On peut obtenir le phosphate dicalcique selon la présente invention en faisant réagir dans un milieu aqueux le chlorure de calcium qui, pour l'essentiel, est débarrassé de résidu insoluble contenant de l'aluminium, avec du phosphate de diammonium, de préférence en léger excès, pour obtenir une solution aqueuse de chlorure d'ammonium et un précipité de phosphate dicalcique. On récupère ensuite le phosphate dicalcique par tout moyen approprié, par exemple, par filtration, et, ensuite, on le lave, sèche et broie pour obtenir le produit final qui contient moins d'aluminium que n'en contenait l'oxyde de calcium de départ. On peut obtenir ainsi un phosphate dicalcique dont la teneur en aluminium ne dépasse pas, de préférence, environ 100 ppm, plus préférentiellement environ 10 ppm et encore plus préférentiellement environ 2 ppm.

Toujours selon la présente invention on peut obtenir du carbonate de calcium à faible teneur en aluminium en faisant réagir le chlorure de calcium qui, pour l'essentiel, est débarrassé de résidu insoluble contenant de l'aluminium, avec des excès molaires d'ammoniac, de dioxyde de carbone et d'eau. On peut récupérer le précipité de carbonate de calcium qui en résulte par n'importe quel procédé, par exemple, par filtration. On peut éventuellement débarrasser le carbonate de calcium récupéré du chlorure d'ammonium résiduel qu'il contient en le lavant ; ensuite, on le sèche, puis on le broie pour obtenir un produit final qui contient moins d'aluminium que n'en contenait l'oxyde de calcium de départ. Le carbonate de calcium qui résulte du procédé selon la présente invention a une teneur en aluminium qui ne dépasse pas, de préférence, environ 100 ppm, plus préférentiellement environ 10 ppm et plus préférentiellement environ 2 ppm. On peut incorporer le carbonate de calcium à faible teneur en aluminium dans un très grand nombre de produits alimentaires, d'additifs alimentaires et autres produits de consommation qui, habituellement, contiennent du carbonate de calcium.

Les sels de calcium selon la présente invention présentent des concentrations en fluorure qui sont significativement plus faibles que celles des produits obtenus selon les procédés classiques. Les composés selon la présente invention, en particulier, ne contiennent pas plus d'environ 20 ppm de fluorure alors que, normalement, les produits obtenus selon les procédés conventionnels ne contiennent pas moins de 45 ppm de fluorure. Par conséquent, le procédé selon la présente invention présente un avantage supplémentaire, à savoir qu'il prévient les problèmes que rencontrent les fournisseurs d'oxyde de calcium du commerce en permettant d'obtenir un oxyde de calcium dont la teneur en fluorure est suffisamment faible pour satisfaire aux spécifications du Food Chemicals Codex (FCC) (Pharmacopée US concernant les produits chimiques utilisés dansl' alimention) concernant les phosphates de calcium.

Les sels de calcium selon la présente invention ont des concentrations en silicium, fer, manganèse et zinc significativement plus faibles que celles des produits obtenus selon les procédés conventionnels.

Les exemples suivants illustrent la mise en oeuvre de la présente invention :

### EXEMPLE 1

### Synthèse en laboratoire de TCP (hydroxyapatite) de haute pureté

On ajoute 614,7 g de CaO de qualité alimentaire FCC pulvérisé (procédé vertical) à 4 800 ml de H₂O désionisée. La bouillie obtenue contient 15 % en poids de matière solide (772 g exprimés en Ca(OH)₂, la conversion étant de 95 %). Pendant que l'on agite la bouillie, on introduit une solution de HCl de qualité FCC à 32 %. On ajoute l'acide lentement, puis goutte-à-goutte, jusqu'à ce que le pH se stabilise entre 6,8 et 7,2. Il faut 2 372 g de solution de HCl à 32 % pour neutraliser le mélange réactionnel.

Ensuite, on filtre sous vide la solution de CaCl₂ obtenue pour éliminer le résidu contenant les impuretés qui contaminaient jusqu'à présent le CaO.

Sous agitation, on ajoute lentement 1 754 g de NaOH à 50 % en poids à la solution filtrée de CaCl₂. Le mélange de Ca(OH)₂ et de saumure que l'on obtient contient 15 % en poids de matière solide. La teneur en eau de cette bouillie est suffisamment élevée pour maintenir le NaCI en solution. Ensuite, on filtre la bouillie sous vide et l'on obtient un gâteau humide. On lave le gâteau à l'eau désionisée (environ 3 l) afin d'éliminer la majeure partie du CINa.

Le gâteau de Ca(OH)₂ qui contient environ 50 % en poids d'eau est retransformé ensuite en bouillie avec 6 000 ml d'eau désionisée afin d'obtenir un mélange contenant environ 10 % en poids de matière solide. Sous agitation, on ajoute à la bouillie une solution d'acide phosphorique à 39,8 % en poids. On ajoute le H₃PO₄ lentement, puis goutte-à-goutte jusqu'à ce que le pH tombe à 7,0. Pour éviter toute contamination par le phosphate dicalcique, on ne laisse jamais le pH descendre en-dessous de 6,8. On ajoute 1 540 g de H₃PO₄ pour neutraliser le mélange réactionnel.

On filtre sous vide la bouillie d'hydroxyapatique que l'on obtient (environ 15 % en poids de matière solide), on la sèche dans un four à convection à 100°C pendant 16 heures. L'essai permet d'obtenir 1 047 g d'hydroxyapatite (matière sèche) de composition suivante :

| | |
|---|---|
| Calcium, % en poids | 37,14 |
| Phosphore, % en poids | 17,92 |
| Aluminium, ppm | 1,5 |

Le rendement est de 95,2 % en poids par rapport au poids total de CaO mis en oeuvre. L'analyse caractéristique de cette qualité de chaux montre que le CaO disponible est compris entre 93,0 et 96,5 % en poids.

### EXEMPLE 2

On prépare cinq échantillons d'hydroxypatite selon le procédé de l'exemple 1 que l'on réunit en un seul lot à l'aide d'un mélangeur en V ; on broie à l'aide d'un broyeur à projection en courant gazeux. L'analyse de ce lot donne les résultats suivants :

| | |
|---|---|
| Dosage du calcium, % en poids | 37,05 |
| P₂O₅, % en poids | 41,12 |
| Perte au feu, % en poids | 4,68 |
| Métaux lourds, tel que Pb, ppm | < 30 |
| Plomb, ppm | < 0,6 |
| Arsenic, ppm | 0,15 |
| Fluorure, ppm | 20 |
| Aluminium, ppm | 1 |
| Fer, ppm | 16 |
| Magnésium, ppm | 780 |
| Manganèse, ppm | non détecté |
| Strontium, ppm | 17 |

### EXEMPLE 3

On procède comme dans l'exemple 1 pour obtenir une quantité d'hydroxyapatite destinée à l'analyse des métaux. On dissout un échantillon de ce produit dans de l'acide nitrique et on procède à une analyse des métaux par spectroscopie ICP (Inductively Coupled Plasma) comme pour l'échantillon de phosphate tricalcique commercialisé par Rhône-Poulenc Basic Chemicals Company et obtenu par un procédé conventionnel à partir d'une source similaire de CaO. Les résultats de ces analyses figurent dans le tableau ci-dessous :

| Elément | Phosphate tricalcique de l'exemple 1 | Phosphate tricalcique du commerce |
|---|---|---|
| Aluminium, ppm | < 2 | 369 |
| Fer, ppm | 14,3 | 221 |
| Potassium | < 3 | 93 |
| Magnésium, ppm | 1 222 | 3 720 |
| Manganèse, ppm | < 1,3 | 3,4 |
| Silicium, ppm | 146 | 2 410 |

| Elément | Phosphate tricalcique de l'exemple 1 | Phosphate tricalcique du commerce |
|---|---|---|
| Strontium, ppm | 15,6 | 135 |
| Yttrium, ppm | < 0,05 | 1,3 |
| Zinc, ppm | 0,9 | 11,9 |
| Zirconium, ppm | < 0,1 | 0,4 |

On peut constater que le procédé selon la présente invention réduit de façon significative les teneurs en aluminium du phosphate tricalcique. De plus, les teneurs en silicium, fer, zinc et manganèse sont considérablement réduites.

### EXEMPLE 4

On met en oeuvre 307 g de CaO et on procède comme dans l'exemple 1 en préparant une solution de CaCl₂ afin d'obtenir un échantillon du résidu contenant les impuretés. On lave à fond le résidu et on le sèche. On obtient 2,7 g de matière sèche. On dissout le résidu lavé et séché et on procède à une analyse par spectroscopie ICP (Inductively-Coupled Plasma-Optical Emission Spectroscopy). Les résultats de l'analyse sont donnés dans le tableau ci-dessous :

| Elément | Concentration, % en poids |
|---|---|
| Aluminium | 3,84 |
| Calcium | 8,83 |
| Fer | 3,50 |
| Magnésium | 1,69 |
| Manganèse | 0,164 |
| Silicium | 14,3 |
| Strontium | 0,0137 |
| Zinc | 0,175 |

Ces résultats confirment la réduction des teneurs en aluminium, silicium, fer, manganèse et zinc observée dans les exemples précédents.

## Revendications

1. Procédé de préparation d'un sel de calcium consistant à
- faire réagir de l'oxyde de calcium contenant de l'aluminium comme impureté avec de l'acide chlorhydrique dans un milieu réactionnel aqueux afin d'obtenir une solution aqueuse contenant du chlorure de calcium et un résidu insoluble contenant l'aluminium présent à l'origine dans l'oxyde de calcium de départ ;
- récupérer le chlorure de calcium débarrassé dans une large mesure du résidu insoluble contenant l'aluminium et à
- convertir en au moins une opération de conversion chimique le chlorure de calcium récupéré en sel de calcium, ledit sel de calcium contenant moins d'aluminium que n'en contenait l'oxyde de calcium de départ.

2. Procédé selon la revendication 1 dans lequel l'opération de conversion chimique consiste à
- faire réagir le chlorure de calcium récupéré avec un hydroxyde alcalin dans un milieu aqueux afin d'obtenir une solution aqueuse de chlorure alcalin et un précipité d'hydroxyde de calcium ;
- récupérer l'hydroxyde de calcium et à
- faire réagir l'hydroxyde de calcium récupéré avec de l'acide phosphorique afin d'obtenir un phosphate tricalcique contenant moins d'aluminium que n'en contenait l'oxyde de calcium de départ.

3. Procédé selon la revendication 2 dans lequel l'hydroxyde alcalin est choisi dans le groupe comprenant l'hydroxyde de sodium, l'hydroxyde de potassium et l'hydroxyde de lithium.

4. Procédé selon la revendication 2 dans lequel l'hydroxyde alcalin est l'hydroxyde de sodium.

5. Procédé selon la revendication 2 dans lequel, après avoir récupéré l'hydroxyde de calcium et avant d'avoir fait réagir l'hydroxyde de calcium avec l'acide phosphorique, on lave l'hydroxyde de calcium afin d'éliminer le chlorure alcalin résiduel éventuellement présent.

6. Procédé selon la revendication 1 dans lequel l'opération de conversion chimique consiste à
- faire réagir le chlorure de calcium récupéré avec du phosphate de diammonium dans un milieu aqueux afin d'obtenir une solution aqueuse de chlorure d'ammonium et un précipité de phosphate dicalcique et à
- récupérer le phosphate dicalcique contenant moins d'aluminium que n'en contenait l'oxyde de calcium de départ.

7. Procédé selon la revendication 6 dans laquelle on lave le phosphate dicalcique afin d'éliminer le chlorure d'ammonium résiduel éventuellement présent.

8. Procédé selon la revendication 1 dans lequel l'opération de conversion chimique consiste à
- faire réagir le chlorure de calcium récupéré avec de l'ammoniac, du dioxyde de carbone et de l'eau afin d'obtenir une solution aqueuse de chlorure d'ammonium et un précipité de carbonate de calcium et à
- récupérer le carbonate de calcium contenant moins d'aluminium que n'en contenait l'oxyde de calcium de départ.

9. Procédé selon la revendication 8 dans lequel on lave le carbonate de calcium afin d'éliminer le chlorure d'ammonium résiduel éventuellement présent.

10. Procédé selon la revendication 1 dans lequel l'oxyde de calcium de départ contient au moins environ 200 ppm d'aluminium et le sel de calcium ne contient pas plus d'environ 100 ppm d'aluminium.

11. Procédé selon la revendication 1 dans lequel l'oxyde de calcium de départ contient au moins environ 200 ppm d'aluminium et le sel de calcium ne contient pas plus d'environ 10 ppm d'aluminium.

12. Procédé selon la revendication 1 dans lequel l'oxyde de calcium de départ contient au moins environ 200 ppm d'aluminium et le sel de calcium ne contient pas plus d'environ 2 ppm d'aluminium.

13. Procédé selon la revendication 1 dans lequel le sel de calcium présente une concentration en fluorure inférieure à celle de l'oxyde de calcium de départ.

14. Procédé selon la revendication 1 dans laquelle le sel de calcium ne contient pas plus d'environ 20 ppm de fluorure.

15. Procédé selon la revendication 1 dans lequel le sel de calcium présente une concentration en silicium inférieure à celle présente dans l'oxyde de calcium de départ.

16. Procédé selon la revendication 1 dans lequel les éléments de transition sont présents dans le sel de calcium en concentrations inférieures à celles de l'oxyde de calcium de départ.

## Claims

1. Process for the preparation of a calcium salt, consisting in
- reacting calcium oxide containing aluminium as impurity with hydrochloric acid in an aqueous reaction medium in order to obtain an aqueous solution containing calcium chloride and an insoluble residue containing the aluminium present originally in the starting calcium oxide;
- recovering the calcium chloride freed to a large extent from the insoluble residue containing the aluminium, and in
- converting the recovered calcium chloride into calcium salt in at least one chemical conversion operation, the said calcium salt containing less aluminium than was present in the starting calcium oxide.

2. Process according to Claim 1, in which the chemical conversion operation consists in
- reacting the recovered calcium chloride with an alkali metal hydroxide in an aqueous medium in order to obtain an aqueous solution of alkali metal chloride and a calcium hydroxide precipitate;
- recovering the calcium hydroxide, and in
- reacting the recovered calcium hydroxide with phosphoric acid in order to obtain a tricalcium phosphate containing less aluminium than was present in the starting calcium oxide.

3. Process according to Claim 2, in which the alkali metal hydroxide is chosen from the group including sodium hydroxide, potassium hydroxide and lithium hydroxide.

4. Process according to Claim 2, in which the alkali metal hydroxide is sodium hydroxide.

5. Process according to Claim 2, in which, after having recovered the calcium hydroxide and before having reacted the calcium hydroxide with phosphoric acid, the calcium hydroxide is washed in order to remove the residual alkali metal chloride which may be present.

6. Process according to Claim 1, in which the chemical conversion operation consists in
- reacting the recovered calcium chloride with diammonium phosphate in an aqueous medium in order to obtain an aqueous solution of ammonium chloride and a precipitate of dicalcium phosphate, and in
- recovering the dicalcium phosphate containing less aluminium than was present in the starting calcium oxide.

7. Process according to Claim 6, in which the dicalcium phosphate is washed in order to remove the residual ammonium chloride which may be present.

8. Process according to Claim 1, in which the chemical conversion operation consists in
- reacting the recovered calcium chloride with ammonia, carbon dioxide and water in order to obtain an aqueous solution of ammonium chloride and a precipitate of calcium carbonate, and in
- recovering the calcium carbonate containing less aluminium than was present in the starting calcium oxide.

9. Process according to Claim 8, in which the calcium carbonate is washed in order to remove the residual ammonium chloride which may be present.

10. Process according to Claim 1, in which the starting calcium oxide contains at least approximately 200 ppm of aluminium and the calcium salt does not contain more than approximately 100 ppm of aluminium.

11. Process according to Claim 1, in which the starting calcium oxide contains at least approximately 200 ppm of aluminium and the calcium salt does not contain more than approximately 10 ppm of aluminium.

12. Process according to Claim 1, in which the starting calcium oxide contains at least approximately 200 ppm of aluminium and the calcium salt does not contain more than approximately 2 ppm of aluminium.

13. Process according to Claim 1, in which the calcium salt has a fluoride concentration lower than that of the starting calcium oxide.

14. Process according to Claim 1, in which the calcium salt does not contain more than approximately 20 ppm of fluoride.

15. Process according to Claim 1, in which the calcium salt has a silicon concentration lower than that present in the starting calcium oxide.

16. Process according to Claim 1, in which the transition elements are present in the calcium salt in concentrations lower than those of the starting calcium oxide.

## Patentansprüche

1. Verfahren zur Herstellung eines Calciumsalzes, bestehend aus
- der Reaktion von Calciumoxid, das Aluminium als Verunreinigung enthält, mit Chlorwasserstoffsäure in einem wäßrigen Reaktionsmedium, um eine wäßrige Lösung zu erhalten, die Calciumchlorid und einen unlöslichen Rückstand enthält, der seinerseits das ursprünglich in dem eingesetzten Calciumoxid vorhandene Aluminium enthält;
- der Gewinnung des Calciumchlorids, das in einem weiten Maße von dem unlöslichen Rückstand befreit wurde, der das Aluminium enthält;
- der Umwandlung des gewonnenen Calciumchlorids in mindestens einem Arbeitsgang zur chemischen Umwandlung in ein Calciumsalz, wobei das genannte Calciumsalz weniger Aluminium enthält als das eingesetzte Calciumoxid enthielt.

2. Verfahren nach Anspruch 1, worin der Arbeitsgang zur chemischen Umwandlung besteht aus
- der Reaktion des gewonnenen Calciumchlorids mit einem Alkalihydroxid in einem wäßrigen Medium, um eine wäßrige Lösung von Alkalichlorid und einen Niederschlag von Calciumhydroxid zu erhalten;
- der Gewinnung des Calciumhydroxids, und
- der Reaktion des gewonnenen Calciumhydroxids mit Phosphorsäure, um ein Tricalciumphosphat zu erhalten, das weniger Aluminium enthält als das eingesetzte Calciumoxid enthielt.

3. Verfahren nach Anspruch 2, worin das Alkalihydroxid aus der Natriumhydroxid, Kaliumhydroxid und Lithiumhydroxid umfassenden Gruppe gewählt wird.

4. Verfahren nach Anspruch 2, worin das Alkalihydroxid Natriumhydroxid ist.

5. Verfahren nach Anspruch 2, worin man nach der Gewinnung des Calciumhydroxids und vor der Reaktion des Calciumhydroxids mit der Phosphorsäure das Calciumhydroxid wäscht, um das eventuell anwesende, restliche Alkalichlorid zu entfernen.

6. Verfahren nach Anspruch 1, worin der Arbeitsgang zur chemischen Umwandlung besteht aus
- der Reaktion des gewonnenen Calciumchlorids mit Diammoniumphosphat in einem wäßrigen Medium, um eine wäßrige Lösung von Ammoniumchlorid und einen Niederschlag von Dicalciumphosphat zu erhalten, und
- der Gewinnung des Dicalciumphosphats, das weniger Aluminium enthält als das eingesetzte Calciumoxid enthielt.

7. Verfahren nach Anspruch 6, worin man das Dicalciumphosphat wäscht, um das eventuell anwesende, restliche Ammoniumchlorid zu entfernen.

8. Verfahren nach Anspruch 1, worin der Arbeitsgang zur chemischen Umwandlung besteht aus
- der Reaktion des gewonnenen Calciumchlorids mit Ammoniak, Kohlendioxid und Wasser, um eine wäßrige Lösung von Ammoniumchlorid und einen Niederschlag von Calciumcarbonat zu erhalten, und
- der Gewinnung des Calciumcarbonats, das weniger Aluminium enthält als das eingesetzte Calciumoxid enthielt.

9. Verfahren nach Anspruch 8, worin man das Calciumcarbonat wäscht, um das eventuell anwesende, restliche Ammoniumchlorid zu entfernen.

10. Verfahren nach Anspruch 1, worin das eingesetzte Calciumoxid mindestens etwa 200 ppm Aluminium und das Calciumsalz nicht mehr als etwa 100 ppm Aluminium enthalten.

11. Verfahren nach Anspruch 1, worin das eingesetzte Calciumoxid mindestens etwa 200 ppm Aluminium und das Calciumsalz nicht mehr als etwa 10 ppm Aluminium enthalten.

12. Verfahren nach Anspruch 1, worin das eingesetzte Calciumoxid mindestens etwa 200 ppm Aluminium und das Calciumsalz nicht mehr als etwa 2 ppm Aluminium enthalten.

13. Verfahren nach Anspruch 1, worin das Calciumsalz eine Konzentration an Fluorid von unter der des eingesetzten Calciumoxids aufweist.

14. Verfahren nach Anspruch 1, worin das Calciumsalz nicht mehr als etwa 20 ppm Fluorid enthält.

15. Verfahren nach Anspruch 1, worin das Calciumsalz eine Konzentration an Silicium von unter der des eingesetzten Calciumoxids aufweist.

16. Verfahren nach Anspruch 1, worin die Übergangselemente in dem Calciumsalz in Konzentrationen anwesend sind, die unter denen des eingesetzten Calciumoxids liegen.
